(19) Europäisches Patentamt
European Patent Office
Office européen des brevets

(11) **EP 2 848 762 A1**

(12) **EUROPEAN PATENT APPLICATION**

(43) Date of publication:
**18.03.2015 Bulletin 2015/12**

(51) Int Cl.:
***E21B 33/03*** (2006.01)     ***H02J 1/08*** (2006.01)
***E21B 33/035*** (2006.01)

(21) Application number: **13306248.9**

(22) Date of filing: **11.09.2013**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicants:
- **ALCATEL LUCENT**
  **92100 Boulogne-Billancourt (FR)**
- **Statoil Petroleum AS**
  **4035 Stavanger (NO)**

(72) Inventors:
- **Bertmand, Trond Benny**
  **1385 Asker (NO)**
- **Ismayilov, Shahin Qafar Oglu**
  **4034 Stavangar (NO)**
- **Marcerou, Jean-François**
  **78730 Rochefort-en-Yv (FR)**

- **Midttveit, Steinar**
  **5179 Godvik (NO)**
- **Stenevik, Karl-Atle**
  **5254 Sandsli (NO)**
- **Vareiile, Ghislaine**
  **91470 Limours (FR)**
- **Verhaege, Thierry**
  **91160 Saulx-les-Chartreux (FR)**

(74) Representative: **White, Duncan Rohan**
**Marks & Clerk LLP**
**Fletcher House (2nd Floor)**
**Heatley Road**
**The Oxford Science Park**
**Oxford OX4 4GE (GB)**

Remarks:
Claim 16 is deemed to be abandoned due to non-payment of the claims fee (Rule 45(3) EPC).

(54) **Providing power to a subsea node**

(57) A system for transporting electric power to a subsea node, the system comprising a first direct current power unit, a second direct current power unit, a referenced earth operatively connected to the first and second power units and disposed between the first and second power units, and a go and return cable comprising a go conductor connected to the first power unit and a return conductor connected to the second power unit, wherein the go conductor is operatively connected to the subsea node.

Figure 5

**Description**

TECHNICAL FIELD

The invention relates to the field of providing electrical power to a subsea node.

BACKGROUND

In subsea hydrocarbon production systems, a host production facility such as shore based production facility or an offshore platform is typically connected to one or more subsea wells. Production pipelines connect each subsea well to the host production facility. Production pipelines are used for conveying extracted hydrocarbons back to the host production facility. In addition to the production pipelines, it is necessary to provide each subsea well with certain services. These include electric power, data transfer, hydraulic fluids and wellstream service fluids, such as chemical additives. These four services are normally provided in one or more subsea umbilicals.

Each subsea well has a subsea Christmas tree; a collection of valves and other fittings to control the flow out of the well and to control the injection of process fluids into the well. Christmas trees typically provide other functions, such as pressure relief, well intervention, acting as a point to connect other devices such as monitoring equipment.

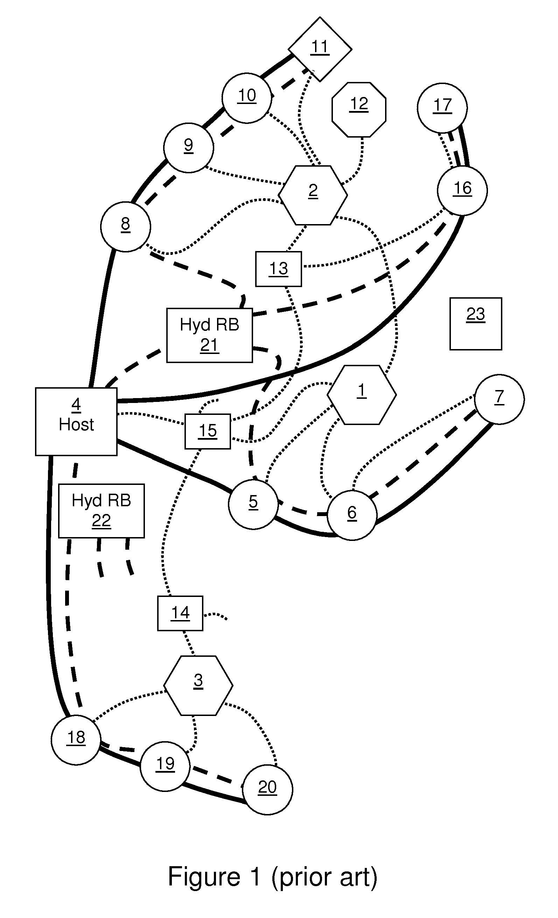

In known system, electrical power from the host production facility is provided to each Christmas tree (or other subsea structure) individually. Recently, some suggestions have been made to provide a subsea power network that can service many different subsea nodes. For example, WO 2011/147459 describes a system in which an electric power and data network is provided for conveying electrical power and data to a plurality of subsea nodes. This is illustrated in Figure 1, in which three hubs 1, 2, 3 are illustrated that can provide data and electrical power to various subsea nodes. A host platform 4 provides power to the hubs 1, 2, 3. In the example of Figure 1, hub 1 provides data and electrical power to subsea wells 5, 6, 7 and is further connected to hub 2. Hub 2 provides electrical power and data to subsea wells 8, 9 and 10, and also provides electrical power and data services to subsea processing unit 11 and subsea environmental observatory 12.

In the example of Figure 1, branching units 13, 14, 15 are also provided. A branching unit is effectively a cable splitter where a power cable is input and two or more power cables are output. The advantage of using branching units is that in the event of a fault or failure, individual portions of the electrical power/data network can be isolated without affecting the rest of the electrical power/data network. Further subsea wells are illustrated 16, 17, 18, 19, 20.

For the fluid conveying network, hydraulic riser bases 21, 22 may be provided, and marginal prospects 23 may also be eventually connected to the electrical power/data network to further develop or evaluate them.

The fluid conduit network, illustrated by darker lines, is completely separate from the electrical power and data network (illustrated by the dotted lines).

Owing to the distances over which power may be transmitted, it is preferred to use High Voltage Direct Current (HVDC) rather than Alternating Current (AC), as AC has a limited range before losses and the high charging current of AC become a problem. With the HVDC solution, it is also preferred to feed the multiple electrical devices in series than in parallel, so as to reduce their operating voltage, and tolerate a cable shunt fault, as explained hereafter.

A problem with providing DC power to a plurality of subsea nodes such as hubs is minimizing current leakage, and also maintaining service to the subsea nodes in the event of a shunt fault. A shunt fault typically occurs when the cable insulation becomes damaged (for example by a fishing vessel, anchor or undersea movements), and a short circuit occurs directly between the metallic core of the cable carrying power and the surrounding sea water. A shunt fault imposes null voltage at the fault location; it can be endured in operation by adapting the voltage at the power source so as to maintain the rated current, until the shunt fault can be repaired.

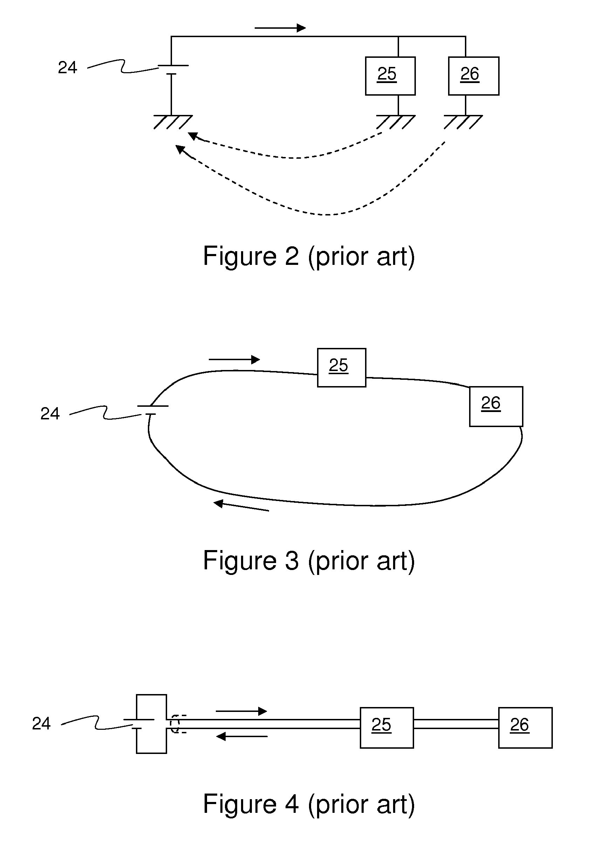

The most commonly used solution when providing power to a plurality of subsea nodes is illustrated in Figure 2. In the example of Figure 2, a power supply 24 provides power to two subsea nodes 25, 26. The current is returned by the sea, through a sea electrode. A problem with this technique is that it can lead to corrosion of metallic equipment in the vicinity of the sea electrode.

In the example of Figures 3 and 4, the electric current flows in a closed loop that is isolated from the sea. This overcomes the issue of corrosion in the vicinity of the sea electrode. In the example of Figure 3, a single conductor cable is used that forms a closed loop with each subsea node 25, 26 being fed in series. A problem with this arrangement is that it doubles the required length of cable, leading to increased costs in terms of the cable itself and laying the cable. In the example of Figure 3, a single cable is used for the power, but the power supply 24 cannot be referenced to earth. This means that measurements and control of the power supply are much more complicated than the examples of Figures 2 and 3. It is not possible to reference the power supply 24 to earth because this would make the system intolerant to any shunt faults that develop,

SUMMARY

It is an object to provide a DC power supply to a plurality of subsea nodes that minimizes current leakage and also provides tolerance to shunt faults. According to a first aspect, there is provided a system for transporting electric power to a subsea node. The system comprises a first direct current power unit and a second direct current power unit. A referenced earth is operatively connected to the first and second power units and disposed between the first and second power units. A go and return cable comprising a go conductor connected to the first power unit and a return conductor is connected to the second power unit. The go conductor is operatively connected to the subsea node.

As an option, the go and return cable is a coaxial cable comprising an inner core conductor and an outer conductor, the outer conductor being disposed radially around the inner conductor, wherein the inner core conductor is the go conductor and the outer conductor is the return conductor.

The system optionally comprises a plurality of subsea nodes, each subsea node of the plurality of subsea nodes being operatively connected to the go conductor.

The system is optionally provided with a current sensor disposed in proximity to the referenced earth, the current sensor arranged to detect a current leakage at a point in the go and return cable.

The system may be provided with a first controller function operatively connected to the first power unit, the first controller function arranged to control a current carried by the go conductor to maintain a current provided to the subsea node. As a further option, the system is provided with a second controller function operatively connected to the second power unit, the second controller function arranged to control a voltage across the second power unit such that, in the absence of a current leak in the return conductor, the voltage across the second power unit substantially matches a measured voltage across the first power unit. In the event that a shunt fault is detected in the return conductor, the voltage between the shunt fault and the second power unit is adjusted to compensate for a current leakage caused by the shunt fault.

According to a second aspect, there is provided a method of compensating for a shunt fault in a go and return cable connected a subsea node to a power supply. A first direct current power unit, a second direct current power unit, and a referenced earth connected to the first and second power units and disposed between the first and second power units are all provided. A go and return cable is also provided, which comprises a go conductor connected to the first power unit and a return conductor connected to the second power unit, wherein the go conductor is operatively connected to the subsea node. A voltage across the second power unit is controlled such that a current in the go conductor substantially matches a current in the return conductor. The voltage across the first and/or second power unit is adjusted to compensate for a current leakage caused by a shunt fault at the return conductor.

The method optionally includes, prior to adjusting the voltage, detecting the shunt fault at the return conductor.

As an option, the method includes determining an amount of voltage adjustment required to reduce the value of the current leakage caused by the shunt fault to substantially zero.

The method optionally further comprises determining a value of the current leakage using a current measured at the referenced earth.

According to a third aspect, there is provided a control device arranged to control power in a go and return cable. The control device is provided with a first functional interface for controlling a current provided by a first power unit. A second functional interface is provided for controlling a voltage across a second power unit, wherein the first power unit and the second power unit are connected to a go conductor and a return conductor respectively of a go and return cable, and a referenced earth is disposed between the first and second power supplies, the go conductor arranged to be operatively connected to at least one subsea node. A third functional interface is provided for receiving a measurement of a current at the referenced earth, the referenced earth current corresponding substantially with a value of a current leakage in the return conductor. A processor is used for determining the presence of a shunt fault in the return conductor using the measured current at the referenced earth. The processor is further arranged to instruct the second functional interface to adjust a voltage across the first and/or the second power unit to compensate for a current leakage caused by the shunt fault at the return conductor.

As an option, the processor is arranged to determine an amount of voltage adjustment required to reduce the value of the current leakage caused by the shunt fault to substantially zero.

According to a fourth aspect, there is provided a power supply for providing power to a subsea node. The power supply comprises a first direct current power unit, a second power direct current unit and a referenced earth operatively connected to the first and second power units and disposed between the first and second power units. The first power supply comprises a first connector for connecting to a go conductor of a go and return cable, the second power supply comprises a second connector for connecting to a return conductor of the go and return cable, and the go conductor is connectable to the subsea node.

As an option, the power supply further comprises a current sensor for measuring a current at the referenced earth.

According to a fifth aspect, there is provided a computer program comprising computer readable code which, when run on a computer device, causes the computer device to perform the steps of:

controlling a current at a first power unit and a voltage at a second power unit, wherein the first power unit and the second power unit are connected to a go conductor and a return conductor respectively of a go and return cable, and a referenced earth is disposed between the first and second power supplies, the go conductor arranged to be operatively connected to at least one subsea node;

determining a measurement of a current at the referenced earth, the referenced earth current corresponding substantially with a value of a current leakage in the return conductor;

determining the presence of a shunt fault at the return conductor using the measured current at the referenced earth; and

instructing an adjustment to a voltage across the first and/or the second power unit to compensate for a current leakage caused by the shunt fault at the return conductor.

According to a sixth aspect, there is provided a computer program product comprising a non-transitory computer readable medium and a computer program as described above in the fifth aspect, wherein the computer program is stored on the computer readable medium.

BRIEF DESCRIPTION OF DRAWINGS

Figure 1 illustrates schematically in a block diagram an exemplary subsea electrical power/data network and a separate fluid conveying network;

Figure 2 illustrates schematically in a block diagram an exemplary subsea power distribution system to a plurality of subsea nodes using a sea electrode;

Figure 3 illustrates schematically in a block diagram an exemplary closed loop subsea power distribution system;

Figure 4 illustrates schematically in a block diagram an alternative exemplary closed loop subsea power distribution system;

Figure 5 illustrates schematically in a block diagram an exemplary closed loop subsea power distribution system using a go and return cable and a go and return power supply;

Figure 6 illustrates schematically in a block diagram an exemplary closed loop subsea power distribution system using a go and return cable and a go and return power supply and having a shunt fault;

Figure 7 illustrates schematically in a block diagram a further exemplary closed loop subsea power distribution system using a go and return cable and a go and return power supply;

Figure 8 is a flow diagram showing steps for detecting and compensating for a shunt fault in a go and return cable; and

Figure 9 illustrates schematically in a block diagram an exemplary computer device.

DETAILED DESCRIPTION

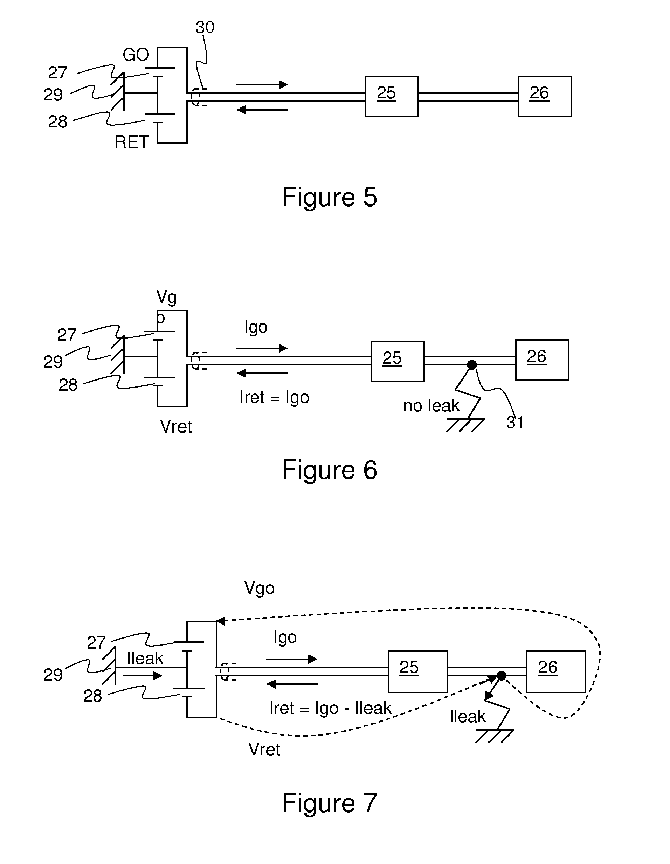

Referring to Figure 5 herein, there is illustrated a power distribution system that includes a power supply that consists of two power units 27, 28 in series. A referenced earth 29 is disposed between the two power units 27, 28. One power unit 27 is used for the "go" path of a go and return cable 30, and the other power unit 28 is used for the "return" path of the cable. The go and return cable 30 carries power between the power supply and a plurality of subsea nodes 25, 26. The example of Figure 5 shows two subsea nodes 25, 26 but it will be appreciated that any number of subsea nodes could be connected using the go and return cable 30.

The cable 30 is a go and return cable, so both the go path and the return path of the power supply are located in a single cable. This reduces the cost of the cable itself (as a double length is not required) and the costs associated with laying the cable.

Each subsea node 25 26 is connected to the cable 30 on the go path. Shunt faults typically affect the return path, so any shunt faults are unlikely to affect power distribution to the subsea nodes 25, 25. The reason that shunt faults tend to affect the return path is that shunt faults are typically caused by physical trauma to the outside of the cable. A coaxial go and return cable has the go path of the cable 30 located in the centre (inner core) of the cable 30 and the return path of the cable 30 disposed radially around the go path (forming an outer core). As the return path of the cable 30 is closer to the outside of the cable, it is more likely to be physically damaged than the go path, so any shunt faults are likely to occur in the return path rather than the go path.

Load balancing in the event of any current leaks can be performed by altering the voltage on the return power unit 28. The cable 30 does not need to be looped in the subsea power distribution network because power is provided using a coaxial cable.

The go and return power supply consists of a go power unit 27 and a return power unit 28 with a reference to earth disposed between them, with one power unit 27 being positive and the other power unit 28 being negative. The combination of the go and return power supply and a go and return cable 30, allows the subsea nodes 25, 26 to be connected in series to the go and return cable 30. As the power unit is referenced to earth, there is no need to use a sea electrode.

The go power unit 27 and the return power unit 28 are controlled to impose the same currents (termed Igo and Iret) on the go and return paths of the cable 30. Figure 6 illustrates the same system as Figure 5, but with a shunt fault 30 that has developed on the return path of the cable 30. In this case, the current leakage Ileak is given by Equation 1.

$$Ileak = Igo - Iret \qquad \text{(Eq. 1)}$$

The go power unit 27 and the return power unit 28 each adapt their voltage (Vgo and Vret respectively). The go power unit 27 adapts its voltage Vgo to compensate for the go and return cable voltage drop from the go power unit 27 to the point of the shunt fault 31, and the return power unit 28 adapts its voltage Vret to compensate for the cable voltage drop between the shunt fault 31 and the return power unit 28. In this way the current leakage remains null. The shunt fault 31 does not affect the power supplied to the subsea nodes 25, 26, and because there is no sea electrode, there is no risk of corrosion of surrounding metallic elements.

Turning now to Figure 6, there is illustrated an exemplary subsea power distribution system. The go and return cable 30 is formed of two coaxial conductors, the "go" portion being the inner one. Each conductor is High Voltage (HV) insulated, for example up to 10 kV, with regard to the other conductor and to the sea.

Each subsea node 25, 26 is connected in series on the go path of the cable 30 only.

The current leakage, given by Equation 1, is detected using a sensor at the earth 29 of the power supply. The current leakage is substantially equal to that of the leakage caused by the shunt fault 31.

The go power unit 27 is controlled in the current mode so as to maintain the nominal current Inom required by the subsea nodes 25, 26 (in other words, Igo = Inom). This ensures that the power to the subsea nodes 25, 26 remains constant.

The return power unit 28 is controlled in the voltage mode. In the absence of any measured current leakage, the return power unit 28 voltage reference is adjusted to remain substantially equal to a measured go power unit 27 voltage. This ensures that the power delivery is shared equally between the go power unit 27 and the return power unit 28.

When a current leakage, Ileak, is detected (indicating the presence of a shunt fault), the return current Iret is given by Equation 2:

$$Ileak = Igo - Iret \qquad \text{(Eq. 2)}$$

The return power unit 28 is controlled in the voltage mode to correct the proportion of Ileak according to Equation 3:

$$Ileak : Vret = Vgo + k \cdot Ileak \qquad \text{(Eq. 3)}$$

where the coefficient k is high (typically 10 KV/mA).

This equation allows the control to determine Vret, from the measurement of Vgo and Ileak. It will be appreciated that Vret may be determined in other ways in order to approach an optimal situation where Vgo = "Vgo-opt", Vret = "Vret-opt", Ileak = 0. Note that the control operates in a "close loop" mode, i.e. measuring a leakage current changes the voltages in such a way that the leakage current decreases. It will finally end up with Ileak = (Vret-opt - Vgo-opt)/k, as small as k is high (typically 0.1mA for a 1 kV correction, if k = 10 KV/mA).

The return power unit 28 voltage reference can therefore be corrected. This leads to a significant difference between Vgo and Vret, and that ensures that the value of Ileak (essentially the current loss caused by the shunt fault) remains very low or almost null.

In practice, Vgo becomes identical to the voltage drop between the go power unit 27 and the shunt fault 31, and Vret becomes identical to the voltage drop between the shunt fault 31 and the return power unit 28. As the loads vary, this equilibrium can be dynamically maintained.

In the event that a severe shunt fault develops that affects both the go and the return path, system operation remains still possible but is limited to the subsea nodes located upstream from the fault. In the example of Figure 7, the shunt fault 31 would mean that subsea node 25 could be provided with the electrical power necessary to maintain normal operations, but subsea node 26 would not be able to maintain normal operations.

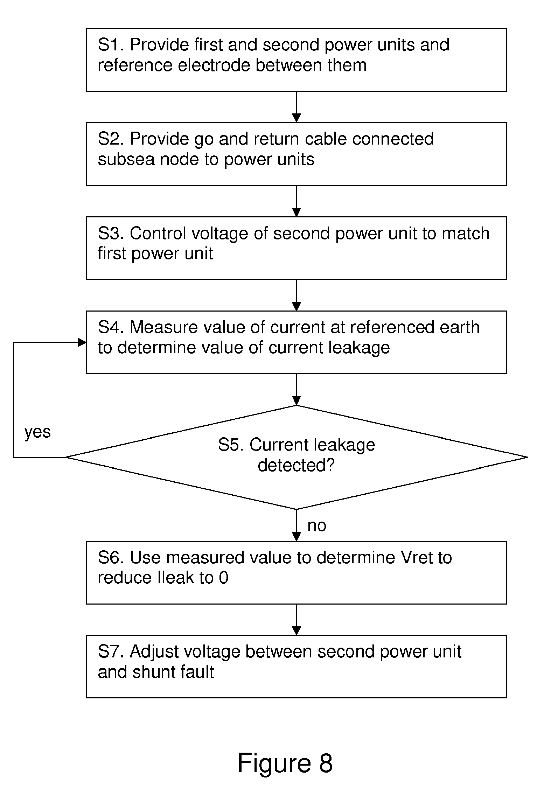

Figure 8 is a flow diagram illustrating exemplary steps involved in compensating for a shunt fault in the return path of the cable 30. The following numbering corresponds to that of Figure 8:

S1. First power unit 27, second power unit 28 and referenced earth 28 are provided.

S2. Go and return cable is used to connect the first power unit 27 to the subsea nodes 25, 26 and return power to the second power unit 28.

S3. In normal use, where there are no shunt faults in the return path of the go and return cable, the voltage between the second power unit and the subsea nodes is controlled to match a measured voltage between the first power unit and the subsea nodes.

S4. A current sensor is used to measure the current at the referenced earth 28. If a current is detected, this is evidence that a shunt fault has developed in the go and return cable. Owing to the coaxial structure of the go and return cable, the shunt fault is likely to be present in the return path of the go and return cable rather than the go path.

S5. If no current is detected, then measurements continue and the procedure reverts to step S4. If a current is detected, then a shunt fault is likely to exist and should be compensated for. The procedure continues at step S6.

S6. The measured value of current at the referenced earth 28 provides a good estimate of Ileak. This value is used to determine the required voltage between the second power unit 27 and the shunt fault 31 in order to reduce Ileak to substantially zero.

S7. The voltage between the second power unit 27 and the shunt fault 31 is adjusted to reduce Ileak to substantially zero.

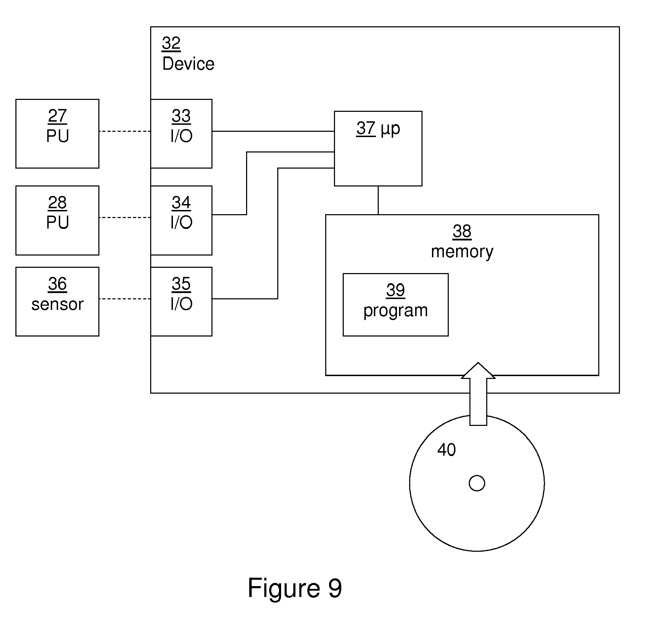

Figure 9 illustrates schematically an exemplary computer device 32 for controlling current and voltage in the go and return cable. The computer device has a first interface 33 that is operatively connected to the first power unit 27 and can control the value of the electric current provided by the first power unit 27. A second interface 28 is also provided that is operatively connected to the second power unit 28 and can control the voltage between the second power unit 28 and the subsea nodes or a shunt fault 31. Note that the interfaces are functional interfaces, and could be embodied, for example, in a single transceiver or a plurality of transmitters and receivers as appropriate.

A third interface 35 is provided that receives measurements from a current sensor 36 disposed at the referenced earth 29. As described above, any current measured at the referenced earth 29 substantially corresponds to any leakage current Ileak caused by a shunt fault in the return path of the go and return cable 30.

A processor 37 is provided for controlling operation of the computer device. It is arranged to maintain the voltage between the second power unit 28 and the subsea nodes 25, 26 at a value substantially the same as a measured voltage between the first power unit 27 and the subsea nodes 25, 26. In the event that a current is measured at the referenced earth by the sensor 36, the processor 37 determines that a shunt fault 31 is likely to exist in the return path of the go and return cable 30. It will be appreciated that different functions of the processor (such as determining that a shunt fault exists, or maintaining the voltage) may be implemented in a single processor or in a plurality of physical processors.

If a shunt fault is detected, then the processor 37, as described above, determines a voltage value between the second power unit 28 and the shunt fault 31 that would effectively reduce the value of Ileak to zero, and instructs the second interface 34 to adjust the voltage Vret between the second power unit 28 and the shunt fault to substantially zero.

The computer device may also be provided with a non-transitory computer readable medium in the form of a memory 38 which may be used to store a computer program 39. When the computer program 38 is executed by the processor 37, it causes the processor to operate as described above. Note also that the computer program 38 may be stored on an external non-transitory computer readable medium 40 which can then be transferred to the first memory 38 or executed directly by the processor 37.

Note that the computer device is not necessary in order to implement the techniques described above. Analogue circuits may be used to compensate for any shunt faults.

It will be appreciated by a person of skill in the art that various modifications may be made to the embodiments described above without departing from the scope of the present disclosure.

The following abbreviations have been used in the above description:

AC    Alternating Current
DC    Direct Current
HVDC    High Voltage Direct Current
LVDC    Low Voltage Direct Current

**Claims**

1. A system for transporting electric power to a subsea node, the system comprising:

a first direct current power unit;
a second direct current power unit;
a referenced earth operatively connected to the first and second power units and disposed between the first and second power units;
a go and return cable comprising a go conductor connected to the first power unit and a return conductor connected to the second power unit, wherein the go conductor is operatively connected to the subsea node.

2. The system according to claim 1, wherein the go and return cable is a coaxial cable comprising an inner core conductor and an outer conductor, the outer conductor being disposed radially around the inner conductor, wherein the inner core conductor is the go conductor and the outer conductor is the return conductor.

3. The system according to claim 1 or claim 2, further comprising a plurality of subsea nodes, each subsea node of the plurality of subsea nodes being operatively connected to the go conductor.

4. The system according to any one of claims 1, 2 or 3, further comprising a current sensor disposed in proximity to the referenced earth, the current sensor arranged to detect a current leakage at a point in the go and return cable.

5. The system according to any one of the preceding claims, further comprising:

a first controller function operatively connected to the first power unit, the first controller function arranged to control a current carried by the go conductor to maintain a current provided to the subsea node.

6. The system according to claim 5, further comprising a second controller function operatively connected to the second power unit, the second controller function arranged to control a voltage across the second power unit such that, in the absence of a current leak in the return conductor, the voltage across the second power unit substantially matches a measured voltage across the first power unit and, in the event that a shunt fault is detected in the return conductor, the voltage between the shunt fault and the second power unit is adjusted to compensate for a current leakage caused by the shunt fault.

7. A method of compensating for a shunt fault in a go and return cable connected a subsea node to a power supply, the method comprising:

providing a first direct current power unit, a second direct current power unit, and a referenced earth connected to the first and second power units and disposed between the first and second power units;
providing a go and return cable comprising a go conductor connected to the first power unit and a return conductor connected to the second power unit, wherein the go conductor is operatively connected to the subsea node;
controlling a voltage across the second power unit such that a current in the go conductor substantially matches a current in the return conductor; and
adjusting a voltage across the first and/or the second power unit to compensate for a current leakage caused by a shunt fault at the return conductor.

8. The method according to claim 7, further comprising prior to adjusting the voltage, detecting the shunt fault at the return conductor.

9. The method according to claim 7 or 8, further comprising:

determining an amount of voltage adjustment required to reduce the value of the current leakage caused by the shunt fault to substantially zero.

10. The method according to any one of claims 7, 8 or 9, further comprising determining a value of the current leakage using a current measured at the referenced earth.

11. A control device arranged to control power in a go and return cable, the control device comprising:

a first functional interface for controlling a current provided by a first power unit;
a second functional interface for controlling a voltage across a second power unit, wherein the first power unit and the second power unit are connected to a go conductor and a return conductor respectively of a go and return cable, and a referenced earth is disposed between the first and second power supplies, the go conductor arranged to be operatively connected to at least one subsea node;
a third functional interface for receiving a measurement of a current at the referenced earth, the referenced earth current corresponding substantially with a value of a current leakage in the return conductor;
a processor for determining the presence of a shunt fault in the return conductor using the measured current at the referenced earth;
the processor being further arranged to instruct the second functional interface to adjust a voltage across the first and/or the second power unit to compensate for a current leakage caused by the shunt fault at the return conductor.

12. The control device according to claim 11, wherein the processor is arranged to determine an amount of voltage adjustment required to reduce the value of the current leakage caused by the shunt fault to substantially zero.

13. A power supply for providing power to a subsea node, the power supply comprising:

a first direct current power unit;
a second power direct current unit;
a referenced earth operatively connected to the first and second power units and disposed between the first and second power units;
wherein the first power supply comprises a first connector for connecting to a go conductor of a go and return cable, the second power supply comprises a second connector for connecting to a return conductor of the go and return cable, the go conductor being connectable to the subsea node.

14. The power supply according to claim 13, further comprising a current sensor for measuring a current at the referenced earth.

15. A computer program comprising computer readable code which, when run on a computer device, causes the computer device to perform the steps of:

controlling a current at a first power unit and a voltage at a second power unit, wherein the first power unit and the second power unit are connected to a go conductor and a return conductor respectively of a go and return cable, and a referenced earth is disposed between the first and second power supplies, the go conductor arranged to be operatively connected to at least one subsea node;
determining a measurement of a current at the referenced earth, the referenced earth current corresponding substantially with a value of a current leakage in the return conductor;
determining the presence of a shunt fault at the return conductor using the measured current at the referenced earth; and
instructing an adjustment to a voltage across the first and/or the second power unit to compensate for a current leakage caused by the shunt fault at the return conductor.

16. A computer program product comprising a non-transitory computer readable medium and a computer program according to claim 15, wherein the computer program is stored on the computer readable medium.

Figure 1 (prior art)

24

25 26

Figure 2 (prior art)

24

25

26

Figure 3 (prior art)

24

25 26

Figure 4 (prior art)

Figure 5

Figure 6

Figure 7

S1. Provide first and second power units and reference electrode between them

S2. Provide go and return cable connected subsea node to power units

S3. Control voltage of second power unit to match first power unit

S4. Measure value of current at referenced earth to determine value of current leakage

S5. Current leakage detected?

yes

no

S6. Use measured value to determine Vret to reduce Ileak to 0

S7. Adjust voltage between second power unit and shunt fault

Figure 8

Figure 9

**EP 2 848 762 A1**

## EUROPEAN SEARCH REPORT

Application Number

EP 13 30 6248

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 01/84689 A1 (AKER ENG AS [NO]; BJERKNES OLE JOHAN [NO]; HAARVIK ROGER [NO]) 8 November 2001 (2001-11-08) * abstract * * figures * | 1-3,13 | INV. E21B33/03 H02J1/08 E21B33/035 |
| X | US 2009/167086 A1 (SEYMOUR ERIC [US]) 2 July 2009 (2009-07-02) * abstract * * figures * | 1-3,13 | |
| X | EP 1 870 978 A2 (DELPHI TECH INC [US] BWI CO LTD SA [LU]) 26 December 2007 (2007-12-26) * abstract * * figures 1-3 * | 1-3,13 | |
| A | US 2010/288493 A1 (FIELDER LANCE I [US] ET AL) 18 November 2010 (2010-11-18) * abstract * * figures * * paragraphs [0013], [0014] * | 1,2 | |
| A,D | WO 2011/147459 A1 (STATOIL ASA [NO]; STENEVIK KARL-ATLE [NO]) 1 December 2011 (2011-12-01) * abstract * | 1,3,13 | TECHNICAL FIELDS SEARCHED (IPC) H02J E21B |
| A | WO 01/67466 A1 (EXPRO NORTH SEA LTD [GB]; RICHARDS ANDREW [GB]; WEBSTER WILLIAM GEORGE) 13 September 2001 (2001-09-13) * abstract * * figures * | 1-3,13 | |

-/--

~~The present search report has been drawn up for all claims~~

| Place of search | Date of completion of the search | Examiner |
|---|---|---|
| Munich | 6 August 2014 | Hurtado-Albir, F |

EPO FORM 1503 03.82 (P04C01)

Europäisches
Patentamt

European
Patent Office

Office européen
des brevets

# EUROPEAN SEARCH REPORT

Application Number

EP 13 30 6248

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | WO 2005/111484 A2 (COOPER CAMERON CORP [US]; BIESTER KLAUS [DE]; KUNOW PETER [DE]; LENZ N) 24 November 2005 (2005-11-24) * abstract * * figures * ----- | 1-3,13 | |

| | | | TECHNICAL FIELDS SEARCHED (IPC) |
|---|---|---|---|
| | | | |

The present search report has been drawn up for all claims

| Place of search | Date of completion of the search | Examiner |
|---|---|---|
| Munich | 6 August 2014 | Hurtado-Albir, F |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

Europäisches
Patentamt

European
Patent Office

Office européen
des brevets

## CLAIMS INCURRING FEES

The present European patent application comprised at the time of filing claims for which payment was due.

☐ Only part of the claims have been paid within the prescribed time limit. The present European search report has been drawn up for those claims for which no payment was due and for those claims for which claims fees have been paid, namely claim(s):

☐ No claims fees have been paid within the prescribed time limit. The present European search report has been drawn up for those claims for which no payment was due.

## LACK OF UNITY OF INVENTION

The Search Division considers that the present European patent application does not comply with the requirements of unity of invention and relates to several inventions or groups of inventions, namely:

see sheet B

☐ All further search fees have been paid within the fixed time limit. The present European search report has been drawn up for all claims.

☐ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☒ None of the further search fees have been paid within the fixed time limit. The present European search report has been drawn up for those parts of the European patent application which relate to the invention first mentioned in the claims, namely claims:

1-3, 13

☐ The present supplementary European search report has been drawn up for those parts of the European patent application which relate to the invention first mentioned in the claims (Rule 164 (1) EPC).

Europäisches
Patentamt

European
Patent Office

Office européen
des brevets

**LACK OF UNITY OF INVENTION
SHEET B**

The Search Division considers that the present European patent application does not comply with the requirements of unity of invention and relates to several inventions or groups of inventions, namely:

1. claims: 1-3, 13

     "System for transporting electric power to a subsea node" (description, page 3. second paragraph, second sentence)
     ---

2. claims: 4-12, 14, 15

     "Method of compensating for a shunt fault in a go and return cable connected to a subsea node to a power supply" (description, page 4, second paragraph, first sentence)
     ---

**ANNEX TO THE EUROPEAN SEARCH REPORT
ON EUROPEAN PATENT APPLICATION NO.** EP 13 30 6248

This annex lists the patent family members relating to the patent documents cited in the above-mentioned European search report.
The members are as contained in the European Patent Office EDP file on
The European Patent Office is in no way liable for these particulars which are merely given for the purpose of information.

06-08-2014

| Patent document cited in search report | | Publication date | Patent family member(s) | | Publication date |
|---|---|---|---|---|---|
| WO 0184689 | A1 | 08-11-2001 | AU | 5894801 A | 12-11-2001 |
| | | | NO | 20002284 A | 29-10-2001 |
| | | | WO | 0184689 A1 | 08-11-2001 |
| US 2009167086 | A1 | 02-07-2009 | EP | 2232685 A1 | 29-09-2010 |
| | | | KR | 20100099721 A | 13-09-2010 |
| | | | TW | 200937791 A | 01-09-2009 |
| | | | US | 2009167086 A1 | 02-07-2009 |
| | | | US | 2010244562 A1 | 30-09-2010 |
| | | | WO | 2009088661 A1 | 16-07-2009 |
| EP 1870978 | A2 | 26-12-2007 | AT | 555532 T | 15-05-2012 |
| | | | EP | 1870978 A2 | 26-12-2007 |
| | | | US | 2008006491 A1 | 10-01-2008 |
| US 2010288493 | A1 | 18-11-2010 | AU | 2010249996 A1 | 24-11-2011 |
| | | | CA | 2760423 A1 | 25-11-2010 |
| | | | CN | 102428251 A | 25-04-2012 |
| | | | DK | 2432966 T3 | 03-03-2014 |
| | | | EP | 2432966 A1 | 28-03-2012 |
| | | | US | 2010288493 A1 | 18-11-2010 |
| | | | WO | 2010135049 A1 | 25-11-2010 |
| WO 2011147459 | A1 | 01-12-2011 | AU | 2010353877 A1 | 20-12-2012 |
| | | | CA | 2800702 A1 | 01-12-2011 |
| | | | CN | 103025994 A | 03-04-2013 |
| | | | GB | 2497841 A | 26-06-2013 |
| | | | RU | 2012155005 A | 10-07-2014 |
| | | | WO | 2011147459 A1 | 01-12-2011 |
| WO 0167466 | A1 | 13-09-2001 | AT | 305657 T | 15-10-2005 |
| | | | AU | 780677 B2 | 07-04-2005 |
| | | | AU | 3586201 A | 17-09-2001 |
| | | | BR | 0109110 A | 03-06-2003 |
| | | | CA | 2402221 A1 | 13-09-2001 |
| | | | EP | 1261974 A1 | 04-12-2002 |
| | | | NO | 20024254 A | 23-10-2002 |
| | | | US | 2003155120 A1 | 21-08-2003 |
| | | | WO | 0167466 A1 | 13-09-2001 |
| WO 2005111484 | A2 | 24-11-2005 | BR | PI0510483 A | 06-11-2007 |
| | | | CA | 2561528 A1 | 24-11-2005 |
| | | | CN | 101015108 A | 08-08-2007 |
| | | | CN | 102709904 A | 03-10-2012 |
| | | | EP | 1759138 A2 | 07-03-2007 |
| | | | RU | 2330939 C1 | 10-08-2008 |

EPO FORM P0459

For more details about this annex : see Official Journal of the European Patent Office, No. 12/82

**ANNEX TO THE EUROPEAN SEARCH REPORT
ON EUROPEAN PATENT APPLICATION NO.**                EP 13 30 6248

This annex lists the patent family members relating to the patent documents cited in the above-mentioned European search report.
The members are as contained in the European Patent Office EDP file on
The European Patent Office is in no way liable for these particulars which are merely given for the purpose of information.

06-08-2014

| Patent document cited in search report | Publication date | Patent family member(s) | Publication date |
|---|---|---|---|
| | | US 2005029476 A1 | 10-02-2005 |
| | | US 2010019573 A1 | 28-01-2010 |
| | | US 2010019930 A1 | 28-01-2010 |
| | | US 2014015449 A1 | 16-01-2014 |
| | | WO 2005111484 A2 | 24-11-2005 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2011147459 A